# EUROPÄISCHE PATENTSCHRIFT

(11) **EP 2 734 390 B1**
(45) Veröffentlichungstag und Bekanntmachung des Hinweises auf die Patenterteilung: **25.03.2015**
(21) Anmeldenummer: 12729133.4
(22) Anmeldetag: 22.06.2012
(51) Int. Cl.: B60G 7/00, B60G 21/05, B60G 9/00

(54) **VIERPUNKTLENKER**
FOUR-POINT SUSPENSION ARM
BRAS DE SUSPENSION À QUATRE POINTS

(30) Priorität: 22.07.2011 DE 102011079654
(43) Veröffentlichungstag der Anmeldung: 28.05.2014
(73) Patentinhaber: ZF Friedrichshafen AG, 88038 Friedrichshafen (DE)
(72) Erfinder: EISMANN, Jens, 49326 Melle (DE); QUAING, Matthias, 48488 Emsbueren (DE); HELM, Eike, 49632 Essen (Oldb) (DE); BUBLIES, Holger, 49078 Osnabrück (DE); GERCKE, Matthias, 27257 Affinghausen (DE); EIFFLAENDER, Thomas, 80935 München (DE); WOLF, Daniel, 88048 Friedrichshafen (DE); STEFFENS, Markus, DE - 67722 Winnweiler (DE); FRANK, Anna, DE - 66440 Blieskastel (DE)
(86) Internationale Anmeldenummer: PCT/EP2012/062134
(87) Internationale Veröffentlichungsnummer: WO 2013/013912

(56) Entgegenhaltungen:
- EP-A1- 2 030 815
- DE-U1- 29 506 571
- US-A- 5 788 263
- US-A1- 2002 067 017

## Beschreibung

Die Erfindung betrifft einen Vierpunktlenker für eine Aufhängung einer Starrachse, insbesondere eines Nutzfahrzeugs, gemäß dem Oberbegriff des Patentanspruchs 1.

Vierpunktlenker der eingangs genannten Art sind aus dem Stand der Technik bekannt und kommen insbesondere bei Lastkraftwagen und anderen Nutzfahrzeugen zum Einsatz. Die gattungsgemäßen Vierpunktlenker vereinigen dabei eine Anzahl von Funktionen und Aufgaben in einem Bauteil, für die zuvor eine Mehrzahl von Lenkern bzw. Bauelementen im Bereich der Achsführung notwendig war.

So entfällt durch den Einsatz eines Vierpunktlenkers u.a. die Notwendigkeit zusätzlicher Querstabilisatoren zur Wankstabilisierung des Fahrzeugaufbaus, da der Vierpunktlenker, zusammen mit den vorhandenen Längslenkern, sowohl die Aufgabe der Achsführung in Quer- und Längsrichtung, als auch Aufgabe der Momentenabstützung und der Wankstabilisierung übernehmen kann. Auch die ansonsten zur Achsführung notwendigen Dreipunktlenker können entfallen.

Mit diesem Hintergrund sind aus dem Stand der Technik - beispielsweise aus der DE 195 21 874, der DE 102 06 809 bzw. aus der DE 10 2004 014 610 - geschmiedete, in Blechbauweise erstellte bzw. als Gussteil ausgeführte Vierpunktlenker bekannt. Beim Schmiedeverfahren ergibt sich jedoch aus Fertigungsgründen zumeist ein massiver Rechteckquerschnitt für die Arme des Vierpunktlenkers, was zu einem hohen Bauteilgewicht und zu hohen Herstellungskosten, und damit auch zu erhöhtem Kraftstoffverbrauch und reduzierter Nutzlast des Nutzfahrzeugs führt.

Die US-A-5788263 offenbart ein Aufhängungssystem zur Aufhängung einer Fahrzeugachse an einem Fahrzeugrahmen, mit zwei im Abstand zueinander angeordneten Lenkern, die jeweils ein erstes Ende, ein zweites Ende, eine obere Wand und eine untere Wand umfassen, wobei die Wände durch mehrere Laminatschichten gebildet sind, die z.B. Glasfasergewebe umfassen, einem sich zwischen den Lenkerarmen erstreckenden Querglied, welches durch die Laminatschichten gebildet sein kann, an den ersten Enden der Lenkerarme befestigten Gelenken zum gelenkigen Verbinden der Lenkerarme mit dem Fahrzeugrahmen, und sich zwischen dem Fahrzeugrahmen und den Lenkern oder dem Querglied erstrecken Fahrzeugfedern, die zur Aufnahme von vertikal in Aufhängung eingeleiteten Kräften dienen. Dabei erstrecken sich die Laminatschichten zumindest teilweise entlang der Wände und um die Enden herum. Die Laminatschichten können aber auch vollständig um die Enden herum verlaufen. Ferner können die zweiten Enden Gelenke zum Anschluss an die Fahrzeugachse umfassen.

Aus der EP-A-2030815 ist ein Verfahren zur Herstellung eines faserverstärkten Federarms mit integriertem Achskörper bekannt, wobei der Federarm im Wesentlichen aus Faserverbundkunststoff-Schichten gebildet wird und auf seiner Vorderseite mit einer oder mehreren zylindrischen Lageraufnahmen versehen wird, die zur Montage des Federarms an einem Fahrzeugrahmen dienen und Lagerbolzen aufnehmen können, wobei der Achskörper an einer Rückseite des Federarms angeordnet wird und mehrere Schichten des Faserverbundkunststoffs um den Achskörper herum geführt werden, wonach der Kunststoff aushärtet, sodass eine um den Achskörper herum verlaufende und fest mit diesem verbundene Hülse gebildet wird.

Die DE-U 29506571 offenbart einen Verbundlenkerachskörper für Kraftfahrzeuge, bestehend aus zwei Längslenkerteilen und einem diese verbindenden Verbundteil, wobei die Längslenkerteile an einem Ende ein Auge zur Verbindung mit dem Fahrzeug und am anderen Ende eine Aufnahme für die Radachse aufweisen. Der Achskörper ist einstückig aus einem Verbundwerkstoff ausgeführt, der aus einer Matrix und aus darin eingebetteten im Wesentlichen in Richtung der Kraftlinien verlaufenden Zugsträngen und ungefähr rechtwinkelig dazu eingewobenen Quersträngen besteht, wobei die Übergänge vom Verbundteil zu den Längslenkerteilen in Draufsicht ausgerundet sind.

Die US 2002/0067017 A1 offenbart einen Achslenker (torque box), mittels welchem eine Fahrzeugachse mit einem Fahrzeugrahmen verbunden ist. Der Achslenker besteht aus Stahl oder aus einem karbon-verstärkten Kunstharz.

Gebaute bzw. geschweißte und gegossene Vierpunktlenker sind ebenfalls schwer und zudem aufwändig in der Herstellung. Insbesondere lassen sich bei Vierpunktlenkern aus Metall die für eine Achsaufhängung geforderten Nachgiebigkeiten kaum realisieren, weshalb diese zu einem großen Teil von entsprechend großvolumig zu dimensionierenden Gummilagerelementen mit unterschiedlichen Radialsteifigkeiten in unterschiedlichen Belastungsrichtungen übernommen werden müssen. Aufgrund der damit auftretenden großen Verformungen neigen diese Gummilager jedoch zum Verschleiß und müssen ggf. frühzeitig ausgetauscht werden.

Mit diesem Hintergrund ist es Aufgabe der vorliegenden Erfindung, einen Vierpunktlenker zu schaffen, mit dem sich die genannten Grenzen des gattungsgemäßen Standes der Technik überwinden lassen. Der Vierpunktlenker soll gegenüber den bekannten metallischen Ausführungen insbesondere merkliche Gewichtsreduzierungen erlauben, er soll bezüglich Gestaltung und Integration der Lager- bzw. Anbindungspunkte an Achse und Chassis größere Flexibilität ermöglichen, ferner die Verwendung kleinerer und/oder härterer Gummilager zulassen, eine bessere Vibrationsdämpfung als Vierpunktlenker aus Metall ermöglichen, und eine gegenüber Vierpunktlenkern aus Metall bessere Korrosionsbeständigkeit bieten, bzw. geringere Anforderungen an den Oberflächenschutz im Einsatz stellen.

Diese Aufgabe wird durch einen Vierpunktlenker mit den Merkmalen des Patentanspruchs 1 gelöst.

Bevorzugte Ausführungsformen sind Gegenstand der Unteransprüche.

Der zur Aufhängung bzw. Führung einer Starrachse insbesondere eines Nutzfahrzeugs vorgesehene Vierpunktlenker weist vier Lageraufnahmen zur Anbindung an Achse bzw. Chassis auf, wobei zwei Lageraufnahmen an der Fahrzeugachse und zwei Lageraufnahmen am Fahrzeugrahmen anlenkbar sind. Der Vierpunktlenker umfasst dabei einen Lenkerkörper, wobei der Lenkerkörper dem durch die Lageraufnahmen gebildeten Trapez einbeschrieben ist, und zur Aufnahme von Fahrwerksbewegungen bzw. Fahrwerksbelastungen, beispielsweise von Achsverschränkungen, (zumindest geringfügig) tordierbar ist.

Der Vierpunktlenker zeichnet sich dadurch aus, dass der Lenkerkörper aus einer Faserverbundanordnung gebildet ist. Die Faserverbundanordnung umfasst dabei zumindest eine, zumindest einer Lageraufnahme zugeordnete Longitudinalfaseranordnung. Vorzugsweise ist jeder der vier Lageraufnahmen des Vierpunktlenkers eine Longitudinalfaseranordnung zugeordnet. Die zumindest eine Longitudinalfaseranordnung schließt dabei die zumindest eine Lageraufnahme zumindest entlang ihres halben Umfangs ein, und verläuft zudem entlang zumindest Teilen des Lenkerkörpers.

Unter einer Longitudinalfaseranordnung ist eine anisotrope Faseranordnung - wie beispielsweise ein Fasergewebe, ein Faservlies oder ein Fasergestrick - zu verstehen, bei dem die enthaltenen Fasern vorwiegend (zu mindestens 3/4 der Fasermasse) unidirektional in Längsrichtung des Gewebes, Vlieses bzw. Gestricks angeordnet sind, wodurch sich ein hoher Elastizitätsmodul und eine hohe Belastbarkeit insbesondere in Längsrichtung der Longitudinalfaseranordnung ergibt.

Auf diese Weise wird es möglich, einen gegenüber den bekannten Ausführungen aus Metall erheblich leichteren Vierpunktlenker aus Faserverbundwerkstoff darzustellen, der den im Betrieb, insbesondere bei Achsaufhängungen von Nutzfahrzeugen, auftretenden Belastungen standhält, und gleichzeitig das eingangs genannte umfangreiche Anforderungsprofil erfüllt. Dabei führt insbesondere die den Lageraufnahmen des Vierpunktlenkers zugeordnete zumindest eine Longitudinalfaseranordnung, sowie deren Verlauf zumindest entlang des halben Umfangs der Lageraufnahme und gleichzeitig entlang zumindest Teilen des Lenkerkörpers dazu, dass die im Bereich der Lageraufnahmen auftretenden erheblichen Kräfte und Momente über die Longitudinalfaseranordnung belastungsoptimiert und großflächig in den Lenkerkörper eingeleitet werden können.

Erfindungsgemäß zeichnet sich der Vierpunktlenker durch zwei Longitudinalfaseranordnungen aus, von denen jede jeweils einem der beiden diagonal gegenüberliegend angeordneten Lageraufnahmenpaare des Vierpunktlenkers zugeordnet ist.

Diese Ausführungsform betrifft mit anderen Worten zwei im Wesentlichen kreuzweise am Lenkerkörper angeordnete bzw. den Lenkerkörper bildende Longitudinalfaseranordnungen, beispielsweise Unidirektional-Bänder aus einem Faserverbundwerkstoff, die jeweils zwei diagonal gegenüberliegend angeordnete Lageraufnahmenpaare miteinander und gleichzeitig mit dem Lenkerkörper verbinden. Diese Ausführungsform lässt sich fertigungstechnisch beispielsweise durch eine Wickeltechnik realisieren, bei der unidirektionale Faserbänder bzw. Prepreg-Lagen (mit Matrixwerkstoff vorimprägnierte Gewebe- bzw. Faseranordnungen) kreuzweise über einen Kern und/oder über die in einer Wickelvorrichtung entsprechend fixierten Lageraufnahmen gewickelt werden. Dabei ermöglicht eine Wickelführung der Bänder bzw. Prepregs vorzugsweise abwechselnd jeweils über das eine und anschließend über das andere diagonal gegenüberliegende Lageraufnahmenpaar zu einer besonders innigen und festen Verbindung der beiden Longitudinalfaseranordnungen im Bereich deren Kreuzungsstelle, und damit zu einer hohen Belastbarkeit und Dauerfestigkeit eines so gestalteten Vierpunktlenkers.

Eine nicht-erfindungsgemäße Ausfürungsform sieht vor, dass eine einzige Longitudinalfaseranordnung allen vier Lageraufnahmen des Vierpunktlenkers zugeordnet ist. Auch diese Ausführungsform lässt sich durch eine geeignete Wickeltechnik realisieren, bei der ein einziges, im Wesentlichen unidirektionales Faserband bzw. Prepreg so geführt bzw. gewickelt wird, dass alle vier Lageraufnahmen durch die Wicklung eingeschlossen werden. Auf ähnliche Weise, mit anderen Worten durch geeignete Wickelführung, kann auch der gesamte Lenkerkörper aus einer einzigen Longitudinalfaseranordnung gebildet werden, wodurch sich eine kostengünstige Darstellung von leichten und hochfesten Vierpunktlenkern ergibt.

Gemäß einer bevorzugten Ausführungsform der Erfindung bildet der Lenkerkörper insgesamt ein geschlossenes Profil. Auf diese Weise wird - gerade bei den hier verwendeten, spezifisch üblicherweise weniger steifen Faserverbundwerkstoffen - eine hohe Torsions- und Biegesteifigkeit für den Vierpunktlenker erzielt, da die bei Torsion bzw. Biegung auftretenden Scherkräfte gut in dem geschlossenen Profil abgestützt werden können. Eine weitere Ausführungsform der Erfindung sieht vor, dass der Lenkerkörper des Vierpunktlenkers (im Lenkerkörper-Innenraum) zumindest einen Steg aufweist. Dabei verbindet der Steg gegenüberliegende Wandungen des Lenkerkörpers schubsteif miteinander. Eine im Rahmen der Erfindung "schubsteife" Verbindung gegenüberliegender Wandungen des Lenkerkörpers liegt vor, wenn dergestalt mittels eines Steges verbundene Wandungen keine parallel zueinander verlaufenden Relativbewegungen mehr ausführen können, welche ohne Vorhandensein des Steges noch möglich wären.

Hiermit lässt sich insbesondere die Torsionssteifigkeit des Vierpunktlenkers weiter vergrößern, sowie - je nach Anordnung, Abmessung und Verlaufsrichtung des Stegs - spezifisch einstellen. Anstelle oder zusätzlich zu einem oder mehreren Stegen kann der Lenkerkörper auch mit einer belastungsorientierten Verrippung auf der Innenoberfläche und/oder auf der Außenoberfläche versehen werden.

Eine weitere bevorzugte Ausführungsform der Erfindung sieht vor, dass der Vierpunktlenker zumindest bereichsweise mit einem Füllkörper aus einem schubsteifen Füllmaterial ausgefüllt ist. Vorzugsweise ist dabei der Füllkörper schubfest mit den Wandungen des Lenkerkörpers verbunden. Auf diese Weise, mit anderen Worten durch Anwendung des Sandwichprinzips, lässt sich bei minimalem Gewicht ein besonders biegesteifer und ggf. auch torsionssteifer Vierpunktlenker erhalten. Insbesondere können durch den Einsatz eines Füllkörpers die Wandungen des Vierpunktlenkers dünn gehalten (geringe Wandstärke; im Wesentlichen also auf Zugbelastung ausgelegt und dimensioniert) werden, da der Füllkörper das Beulen bzw. Knicken bei Druckbelastungen in der Wandung effektiv unterbindet.

Ferner kann durch spezifische Auswahl der Materialeigenschaften des Füllkörpers ggf. auch nachträglich eine Steifigkeitsanpassung erfolgen dergestalt, dass ein und derselbe Vierpunktlenker-Körper (beispielsweise durch Ausschäumen) jeweils unterschiedliche Steifigkeiten, insbesondere Torsionssteifigkeiten erhalten kann. Auf diese Weise kann ein Vierpunktlenker vergleichsweise kostengünstig - ohne nennenswerte Änderungen an Geometrie, Werkzeug und Verbundwerkstoff-Materialeinsatz - zum Einsatz für unterschiedliche Fahrzeuge angepasst werden.

Gemäß einer weiteren bevorzugten Ausführungsform bildet der Lenkerkörper ein in Fahrzeugquerrichtung und/oder in Fahrzeuglängsrichtung zumindest einseitig offenes Profil. Auch eine sowohl in Fahrzeugquerrichtung als auch in Fahrzeuglängsrichtung beidseitig offene Gestaltung des Lenkerkörpers kann sinnvoll sein. Ein dergestalt geometrisch offen ausgeführter Vierpunktlenker-Körper ermöglicht einerseits eine einfachere und kostengünstigere Fertigung, beispielsweise ohne einen verlorenen Kern einsetzen zu müssen. Andererseits lässt sich auf diese Weise definiert eine erhöhte Torsions- und/oder Längsnachgiebigkeit des Lenkers erreichen. Hierdurch können definierte Achsführungaufgaben, beispielsweise Wankstabilisierung in höherem Maße durch den Lenkerkörper selbst übernommen werden, weshalb beispielsweise weniger voluminöse Elastomerlager eingesetzt werden können, bzw. die Elastomerlager insbesondere durch Wankbewegungen weniger verformt werden und damit eine längere Lebensdauer erzielen.

Ein sowohl in Fahrzeugquerrichtung als auch in Fahrzeuglängsrichtung beidseitig offenes Profil des Lenkerkörpers lässt sich gemäß einer nicht-erfindungsgemäßen Ausführungsform dadurch darstellen, dass der Lenkerkörper aus zwei separat gefertigten Schalenhälften zusammengesetzt wird. Diese Ausführungsform steht vor allem im Dienst einer kostengünstigen Fertigung, die insbesondere in Form zweier im Wesentlichen ebener Strukturen als Schalenhälften und deren anschließendes Zusammenfügen erfolgen kann.

Eine weitere Ausführungsform der Erfindung sieht vor, dass der Lenkerkörper zumindest einen längenveränderbaren Abstandshalter zwischen zwei gegenüberliegenden Wandungen des Lenkerkörpers aufweist. Auf diese Weise lässt sich einerseits ebenfalls die Steifigkeit des Lenkerkörpers erhöhen, indem die gegenüberliegenden Wandungen (ähnlich wie im Falle eines Stegs oder eines Füllkörpers) miteinander verbunden und damit verstärkt werden. Zusätzlich kann durch Längenveränderung des Abstandshalters, die beispielsweise auch aktuatorisch bzw. motorisch erfolgen kann, der Abstand der gegenüberliegenden Wandungen bzw. deren Wölbungsgrad, und damit die Charakteristik bzw. Steifigkeit des Lenkers angepasst bzw. verändert werden.

Gemäß einer weiteren Ausführungsform der Erfindung bildet der Lenkerkörper in der fahrzeugbezogenen Draufsicht eine im Wesentlichen einstückig kreuzförmige bzw. X-förmige Gestalt mit einem zentralen Korpusbereich und vier peripheren Lenkerarmen, wobei jeder Lenkerarm eine der Lageraufnahmen trägt bzw. tragen kann. Dabei sind die Lenkerarme als im Querschnitt profilierte Biegeträger gestaltet, deren Querschnittsform im Wesentlichen einem Kastenprofil oder einem I-Träger entspricht. Auf diese Weise lassen sich die gewünschten Lenkersteifigkeiten, insbesondere die konstruktiv vorgesehene Torsionsnachgiebigkeit des Vierpunktlenkers, in weiten Grenzen einstellen. Zudem kommt die Ausbildung der Lenkerarme als profilierte Biegeträger konstruktiv der zumeist höheren Elastizität (dem geringeren E-Modul) von Faserverbundwerkstoffen gegenüber Metallen entgegen.

Eine weitere bevorzugte Ausführungsform der Erfindung betrifft einen Vierpunktlenker, bei dem die beiden Lageraufnahmen der fahrzeugbezogen links bzw. rechts angeordneten Lageraufnahmenpaare jeweils mittels eines Torsionsrohrs starr miteinander verbunden sind. Dabei besteht das Torsionsrohr vorzugsweise aus Metall, wobei zudem die durch das Torsionsrohr miteinander verbundenen beiden Lageraufnahmen eines linken oder rechten Lageraufnahmenpaares zudem einstückig mit dem Torsionsrohr ausgebildet sein können, beispielsweise mit dem Torsionsrohr verschweißt. Auf diese Weise lässt sich insbesondere die Torsionssteifigkeit und/oder die Längssteifigkeit des Vierpunktlenkers entlang der Fahrtrichtung im Einbauzustand erhöhen, während die Torsionsnachgiebigkeit des Vierpunktlenkers weitgehend unbeeinflusst bleibt.

Gemäß einer weiteren bevorzugten Ausführungsformen ist im Bereich zumindest eines, vorzugsweise aller Lageraufnahmen des Vierpunktlenkers jeweils eine Lagerhülse bzw. ein Elastomerlager als Fertigteil einlaminiert. Auf diese Weise entfällt der hohe Aufwand insbesondere für die Zerspanung zur Ausbildung der Lagerhülse für die anschließende Aufnahme eines Elastomerlagers, bzw. der Aufwand, zunächst eine separate Lagerhülse in jeden Lenkerarm und anschließend jeweils das zugehörige Elastomerlager einbauen zu müssen.

Vorzugsweise ist dabei die zumindest eine Lagerhülse einstückig mit dem Lenkerkörper bzw. mit den Lenkerarmen ausgebildet. Dies erlaubt eine kostengünstige Ausführung des Vierpunktlenkers dergestalt, dass dieser einstückig auch bereits die Lagerhülsen umfasst, wodurch insbesondere Elastomerlager direkt in den Kunststoffkörper eingesetzt werden können, ohne dass zusätzliche, insbesondere metallische Lagerhülsen erforderlich sind oder eingebaut werden müssen.

Nach einer weiteren bevorzugten Ausführungsform der Erfindung ist vorgesehen, dass zumindest eine der Lageraufnahmen, vorzugsweise mehrere oder alle Lageraufnahmen, für die Aufnahme von nichtelastischen, rotatorischen Gelenken zur Anbindung des Vierpunktlenkers an Fahrzeugachsen bzw. Fahrzeugrahmen ausgebildet sind.

Auf diese Weise lässt sich ein Vierpunktlenker realisieren, der teilweise oder ganz ohne Notwendigkeit für Elastomergelenke zur Anbindung an Fahrzeugachsen bzw. Fahrzeugrahmen auskommt. Anstelle von Elastomergelenken lassen sich dann beispielsweise rotatorische Gleitlager (im Gegensatz zu Elastomerlagern also nichtelastische Gelenke) zur Anbindung des Vierpunktlenkers an Fahrzeugachsen bzw. Fahrzeugrahmen einsetzen. Die elastische Funktion der dann weggefallenen Elastomergelenke (Nachgiebigkeit, Schwingungsdämpfung) wird bei dieser Ausführungsform somit durch den Vierpunktlenker selbst übernommen bzw. realisiert, was - im Gegensatz zu den metallischen Vierpunktlenkern aus dem Stand der Technik - erst durch die Ausbildung des Vierpunktlenkers aus Faserverbundwerkstoff ermöglicht wird.

Gemäß einer weiteren Ausführungsform der Erfindung zeichnet sich der Vierpunktlenker dadurch aus, dass zumindest eine, vorzugsweise mehrere bzw. alle Lageraufnahmen bzw. Lenkerarme zur nichtgelenkigen Anbindung an Fahrzeugachse bzw. Fahrzeugrahmen ausgebildet sind. Bei dieser Ausführungsform erfolgt die Anbindung des Vierpunktlenkers an Fahrzeugachse bzw. Fahrzeugrahmen gänzlich ohne Gelenke. Hier wird somit nicht nur die elastische Funktion der (bereits weggefallenen) Elastomergelenke, sondern zusätzlich auch die rotatorische Beweglichkeit der (bei dieser Ausführungsform ebenfalls weggefallenen) Gleitlager durch den Vierpunktlenker selbst übernommen.

Diese Ausführungsform ermöglicht mit anderen Worten die direkte, schwenkbewegliche Verbindung des Vierpunktlenkers beispielsweise mit dem Chassis eines Kraftfahrzeugs, ohne dass hierfür Lagerelemente wie beispielsweise Elastomergelenke oder Gleitlager erforderlich sind. Stattdessen erfüllt der zumindest eine biegeelastisch ausgeführte Lagerungsabschnitt des Lenkerelements selbst die Aufgabe der schwenkbeweglichen Lagerung des Lenkerelements gegenüber der Anschlussbaugruppe, beispielsweise gegenüber dem Fahrzeugchassis oder der Fahrzeugachse. Hierdurch lassen sich in erheblichem Umfang insbesondere Herstellungs- und Montageaufwand, ferner entsprechende Kostenumfänge ebenso wie Bauteilmasse und Bauraumbedarf einsparen.

Vorzugsweise wird die nichtgelenkige Anbindung des Vierpunktlenkers an Achse und/oder Chassis dadurch realisiert, dass der Lenkerkörper bzw. die Lenkerarme im Bereich der zumindest einen Lageraufnahme biegeelastisch ausgebildet sind, bevorzugt in Form eines Laminats, welches zumindest eine Laminatlage aus einem Elastomerwerkstoff umfasst. Auf diese Weise lässt sich ein einstückiger Übergang zwischen den im Wesentlichen starren Bereichen des Vierpunktlenkers und den zumindest an den Enden biegeelastisch ausgebildeten Lenkerarmen des Vierpunktlenkers erreichen, welche bei dieser Ausführungsform somit die Aufgabe der elastischen ebenso wie der gelenkigen Verbindung zur Achse bzw. zum Fahrzeugchassis übernehmen.

Im Folgenden wird die Erfindung anhand lediglich Ausführungsbeispiele darstellender Zeichnungen näher erläutert. Dabei zeigt:
Fig. 1: einen Vierpunktlenker gemäß einer Ausführungsform der vorliegenden Erfindung in schematischer isometrischer Darstellung;
Fig. 2: einen Querschnitt durch den Lenkerkörper einer weiteren Ausführungsform eines Vierpunktlenkers gemäß der vorliegenden Erfindung, mit längenveränderbarem Abstandshalter;
Fig. 3: in einer Fig. 1 entsprechenden Darstellung und Ansicht einen Vierpunktlenker gemäß einer Ausführungsform der vorliegenden Erfindung mit kreuzweise angeordneten unidirektionalen Lagen bzw. Longitudinalfaserwicklungen;
Fig. 4: in einer Fig. 1 und 3 entsprechenden Darstellung und Ansicht einen Vierpunktlenker gemäß einer weiteren Ausführungsform der vorliegenden Erfindung mit in Querrichtung offenem Lenkerkörper;
Fig. 5: in einer Fig. 1, 3 und 4 entsprechenden Darstellung und Ansicht einen Vierpunktlenker gemäß einer weiteren Ausführungsform der vorliegenden Erfindung mit in Quer- und Längsrichtung offenem Lenkerkörper;
Fig. 6: in schematischer isometrischer Darstellung den Lenkerkörper eines Vierpunktlenkers gemäß einer weiteren Ausführungsform der Erfindung, in Fachwerk-Bauweise mit Torsionsrohren;
Fig. 7: in einer Fig. 6 entsprechenden Darstellung und Ansicht einen weiteren Vierpunktlenker, in hybrider Fachwerk-Bauweise mit Torsionsrohren aus Stahl.

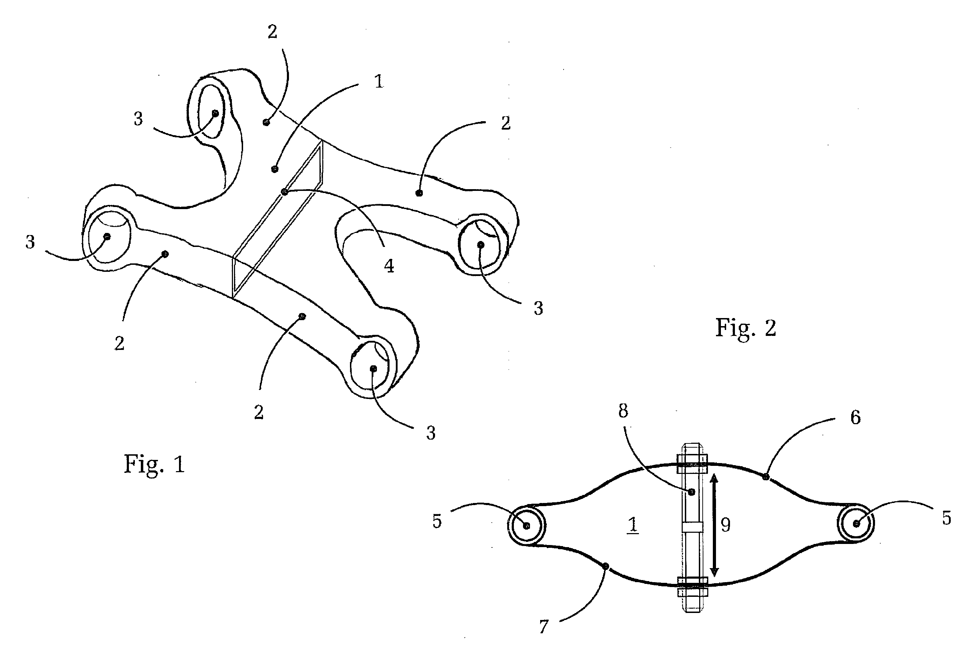

Fig. 1 zeigt einen Vierpunktlenker gemäß der vorliegenden Erfindung in schematischer isometrischer Darstellung. Man erkennt einen Korpusbereich 1, an den sich einstückig vier Lenkerarme 2 anschließen, wobei jeder Lenkerarm 2 wiederum einstückig in eine Lageraufnahme 3 übergeht.

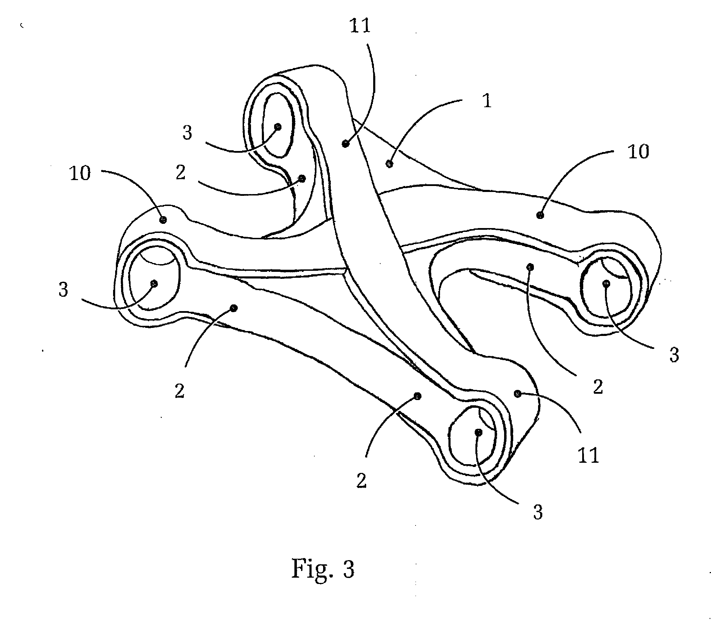

Zusätzlich ist in Fig. 1 der kastenförmige Querschnitt 4 des Korpusbereichs 1 des Vierpunktlenkers angedeutet. Der in Fig. 1 abgebildete Vierpunktlenker bildet somit einen großvolumigen Hohlkörper mit kastenförmigem Querschnitt 4, wobei die Lageraufnahmen 3 einstückig in den Vierpunktlenker eingearbeitet sind. Auf diese Weise - sowie aufgrund der Fertigung des abgebildeten Vierpunktlenkers aus Faserverbundwerkstoff mit den spezifisch ausgerichteten bzw. angeordneten Faserlagen - lassen sich die Anforderungen wie Gewichtsreduzierung, belastungsorientierte Gestaltung, spezifische Nachgiebigkeiten bezüglich Biegung, Längskraft bzw. Torsion sowie die Möglichkeit der Integration von Elastomerlagern bzw. Gelenken verwirklichen. Die charakteristische Anordnung der Longitudinalfasern bzw. unidirektionalen Verstärkungen, welche die Lageraufnahmen 3 zumindest entlang deren jeweils halbem Umfang einschließen sowie entlang zumindest Teilen des Lenkerkörpers 1, 2 verlaufen, geht aus Fig. 1 der Übersichtlichkeit halber nicht eigens hervor, s. hierzu jedoch insbesondere Fig. 3 und die zugehörige Beschreibung. Die Longitudinalfasern bzw. unidirektionalen Verstärkungen sind je nach Ausführung zusätzlich zum Grundlaminat des Hohlkörpers oder alleinig angebracht.

Fig. 2 zeigt den Querschnitt durch einen Vierpunktlenker mit Korpusbereich 1 und Wandungen 6, 7 gemäß einer weiteren Ausführungsform der Erfindung. Bei diesem Vierpunktlenker sind seitlich - in Längsrichtung des Korpusbereichs 1 - Rohre 5 als Verstärkungen eingearbeitet. Zudem besitzt der Vierpunktlenker gemäß Fig. 2 jedoch einen hier als Gewindestange ausgeführten Abstandshalter 8, welcher die beiden Wandungen 6, 7 des Korpusbereichs 1 auf einem konstanten Abstand hält. Hierdurch ergibt sich zunächst einmal eine Versteifungswirkung, da der Abstandshalter 8 Beulbewegungen der Wandungen 6, 7 insbesondere bei Torsionsbelastung des Vierpunktlenkers weitestgehend unterbindet.

Zudem kann durch Veränderung der effektiven Länge 9 des Abstandshalters 8 die Charakteristik bzw. Steifigkeit des Vierpunktlenkers verändert werden. Beispielsweise ändert sich durch Vergrößerung der Höhe 9 des Korpusbereichs 1 der Wölbungsgrad der beiden Wandungen 6, 7 ebenso wie das Flächenträgheitsmoment des abgebildeten Querschnitts des Vierpunktlenkers, mit entsprechenden Folgen für den Grad der Biege- bzw. Torsionssteifigkeit des Korpusbereichs 1. Zum anderen ergibt sich durch eine Vergrößerung des Abstandes 9 zwischen den beiden Wandungen 6, 7 eine Vorspannung der Wandungen 6, 7 ebenso wie eine Vorspannung der (in Fig. 2 nicht abgebildeten, s. jedoch Fig. 1) Lenkerarme 2 bezüglich Biegung.

Auch letzteres hat entsprechende Auswirkungen auf die Gesamttorsionssteifigkeit des Vierpunktlenkers, wobei eine unterschiedliche Wölbung der Wandungen 6, 7 zudem auch die Längsnachgiebigkeit des Vierpunktlenkers entlang der Fahrtrichtung im Einbauzustand beeinflusst. Ein Vierpunktlenker gemäß Fig. 2 mit veränderbarem Abstandshalter lässt sich somit auf einfache Weise bezüglich unterschiedlicher Einsatzzwecke anpassen, beispielsweise für den Einsatz bei unterschiedlichen Fahrzeugen oder Fahrzeugklassen.

Fig. 3 zeigt einen Vierpunktlenker ähnlich dem in Fig. 1 dargestellten, mit einem Korpusbereich 1, vier Lenkerarmen 2 sowie vier Lageraufnahmen 3, wobei Korpusbereich 1, Lenkerarme 2 und Lageraufnahmen 3 wiederum einstückig aus einem Faserverbundwerkstoff ausgebildet sind. In Fig. 3 ist zusätzlich eine erfindungsgemäße Ausführung für die Anordnung von Longitudinalfasersträngen bzw. unidirektionalen Prepregs 10, 11 dargestellt.

Bei der dargestellten Ausführungsform besteht der Vierpunktlenker somit zunächst einmal aus einem durch den Korpusbereich 1, die Lenkerarme 2 und die Lageraufnahmen 3 gebildeten Grundkörper (der ebenfalls bereits belastungsoptimiert angeordnete unidirektionale Faseranordnungen enthalten kann, die jedoch nicht eigens dargestellt sind) sowie aus den in Form von Wicklungen oder Bandagen auf dem Grundkörper angeordneten unidirektionalen Fasersträngen 10, 11. Die Wicklungen bzw. Faserstränge 10, 11 verbinden dabei insbesondere jeweils zwei diagonal gegenüberliegende Lageraufnahmen 3, indem sie die jeweilige Lageraufnahme 3 (entlang mehr als ihres jeweiligen halben Außenumfangs) bedecken und damit formschlüssig einschließen. Dies bedeutet mit anderen Worten auch, dass die Longitudinalfasern in Umfangsrichtung der Lageraufnahme zu liegen kommen und somit belastungsoptimiert bezüglich der Kräfteeinleitung in den Lenkerkörper 1, 2 angeordnet sind.

Aufgrund der orthotropen Materialeigenschaften der unidirektionalen Faserstränge 10, 11 - die mit anderen Worten in unterschiedlichen Richtungen unterschiedliche Steifigkeiten (E-Modul) und unterschiedliche Festigkeiten besitzen - kann der Vierpunktlenker somit verformungs- bzw. belastungsoptimiert gestaltet werden. Damit können sowohl die an der Fahrzeugachse auftretenden Längs- bzw. Querkräfte in das Chassis eingeleitet werden, als auch die auftretenden Torsionen bei Fahrwerksverschränkung oder Kurvenfahrt durch entsprechende Verformung des Lenkers aufgenommen werden.

Beim Material der unidirektionalen Faserstränge 10, 11 kann es sich insbesondere um Kohlefasern, um Glasfasern oder um eine Kombination dieser Fasern handeln, wobei die Fasern durch Wickeln, Drapieren oder Weben entsprechend konform zur Belastungsrichtung angeordnet werden. Letzteres gilt außer für die Faserstränge 10, 11 auch für den Korpusbereich 1 selbst sowie für die daran einstückig angeformten Lenkerarme 2 und Lageraufnahmen 3.

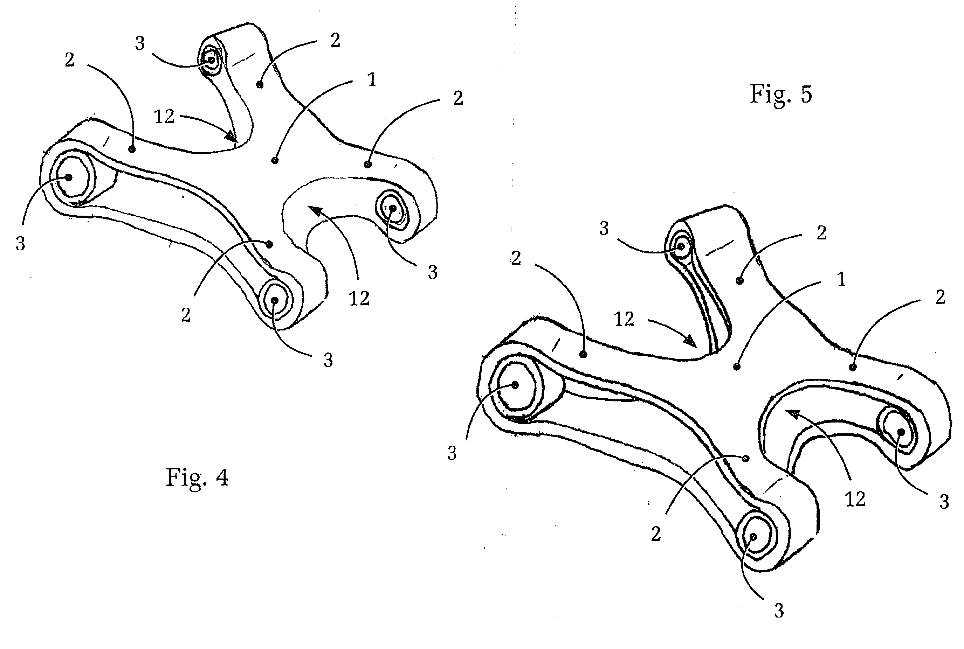

Die Fig. 4 und 5 zeigen zwei weitere Ausführungsformen von Vierpunktlenkern gemäß der vorliegenden Erfindung. Dabei zeigt Fig. 4 einen Vierpunktlenker mit Korpusbereich 1, Lenkerarmen 2 und Lageraufnahmen 3, bei dem der Korpusbereich 1 in Fahrzeugquerrichtung offen ausgebildet ist, während der Korpusbereich 1 in Fahrzeuglängsrichtung geschlossene Wandungen 12 aufweist. Auch bei dem Vierpunktlenker gemäß Fig. 4 sind die Lageraufnahmen 3 wieder in den aus Longitudinalfaseranordnungen gebildeten Lenkerkörper bzw. die mit dem Lenkerkörper einstückig ausgebildeten Lenkerarme 2 dergestalt integriert, dass die (in Fig. 4 nicht dargestellten, s. jedoch Fig. 3) Faserverläufe die Lageraufnahme zumindest entlang ihres halben Außenumfangs einschließen und somit fest im Vierpunktlenker verankern.

Dank der in Fahrzeugquerrichtung offenen Ausbildung des Korpusbereichs 1 weist der Vierpunktlenker gemäß Fig. 4 eine höhere Nachgiebigkeit insbesondere bezüglich torsionaler Verformung auf, und eignet sich damit besonders zum Einbau in leichtere Fahrzeuge, bei geringeren Anforderungen bezüglich Wankstabilisierung und/oder höheren Anforderungen im Hinblick auf die maximale Achsverschränkung.

Bei dem in Fig. 5 dargestellten Vierpunktlenker ist der Korpusbereich 1 sowohl in Fahrzeugquerrichtung als auch in Fahrzeuglängsrichtung (bei 12) offen ausgebildet, was zu einer noch höheren torsionalen ebenso wie longitudinalen Nachgiebigkeit sowohl des Korpusbereichs 1 als auch der Lenkerarme 2 führt.

Hierdurch kann ein Vierpunktlenker beispielsweise gemäß Fig. 5 die - bisher grundsätzlich von den in den Lageraufnahmen 3 anzuordnenden Elastomerlagern erfüllten - Aufgaben wie radiale und axiale Elastizität sowie Schwingungsdämpfung teilweise oder ggf. vollständig übernehmen, so dass entweder kleinere und leichtere Elastomerlager eingesetzt werden können, oder die Notwendigkeit für Elastomerlager sogar komplett entfallen kann. Dies bedeutet mit anderen Worten, dass der Vierpunktlenker somit unter Umständen sogar direkt mittels Gleitlagerungen mit dem Fahrzeugchassis und/oder mit der Fahrzeugachse verbunden werden kann. Hierdurch werden Bauraum, Gewicht und Kosten eingespart, während gleichzeitig eine noch weitergehende Funktionsintegration im Hinblick auf den Vierpunktlenker und das Achssystem erzielt wird.

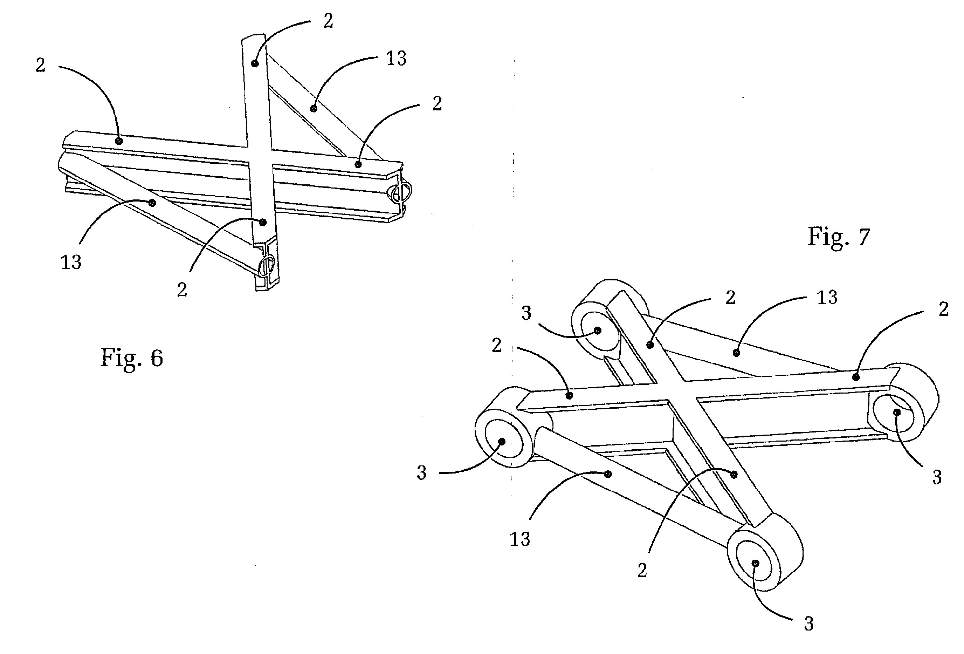

Fig. 6 zeigt in isometrischer Darstellung den Lenkerkörper einer weiteren Ausführungsform Vierpunktlenkers gemäß der vorliegenden Erfindung. Um den Aufbau des in Fig. 6 dargestellten Lenkerkörpers zu verdeutlichen, sind die Lageraufnahmen in Fig. 6 nicht dargestellt. Man erkennt, dass der Lenkerkörper in Form einer Fachwerkstruktur aus zwei kreuzförmig angeordneten Balken, welche die Lenkerarme 2 bilden, sowie aus zwei Torsionsrohren 13 gebildet ist. Die Torsionsrohre 13 verlaufen dabei (im Einbauzustand des Vierpunktlenkers) in Fahrzeuglängsrichtung und verbinden paarweise jeweils die beiden Lageraufnahmen der fahrzeugbezogen links bzw. rechts angeordneten Lageraufnahmenpaare (vgl. auch Fig. 7).

Bei dem Vierpunktlenker gemäß Fig. 6 sind die Balken 2 sowie die Torsionsrohre 13 wieder in einem Faserverbundwerkstoff ausgeführt. Aufgrund der Fachwerk-Anordnung der Balken 2 und der Torsionsrohre 13 wird die Torsionssteifigkeit bzw. die Verformung des Vierpunktlenkers bei Torsionsbelastung in eine Durchbiegung der Balken 2 überführt. Die Torsionssteifigkeit des Vierpunktlenkers lässt sich somit auf die Biegesteifigkeit der Balken 2 sowie auf die Steifigkeit im Bereich der Kreuzungsstelle der Balken 2 abbilden bzw. rückführen.

In Fahrtrichtung wirkende Längskräfte hingegen werden durch die zug- bzw. drucksteifen Torsionsrohre 13 aufgenommen, womit die Längssteifigkeit bzw. Längsnachgiebigkeit des Vierpunktlenkers gemäß Fig. 6 bzw. 7 hauptsächlich durch die Torsionsrohre 13 definiert ist. Quer zur Fahrtrichtung wirkende Seitenkräfte hingegen werden - über die kreuzförmige Anordnung der Balken 2 und die Einbindung des Vierpunktlenkers in das Chassis - in Form von Zug- bzw. Druckkräften in den Balken 2 abgestützt.

Auch der Vierpunktlenker gemäß Fig. 7 ist nach Art einer Fachwerkstruktur aufgebaut, ähnlich wie der Vierpunktlenker gemäß Fig. 6. Im Unterschied zu Fig. 6 sind in Fig. 7 auch die Lageraufnahmen 3 mit abgebildet. Bei dem Vierpunktlenker gemäß Fig. 7 bestehen zudem die Torsionsrohre 13 aus Stahl und sind einstückig mit den jeweils zugeordneten Lageraufnahmenpaaren 3 ausgebildet. Durch die einstückige Ausbildung der Lageraufnahmen 3 - jeweils auf einer fahrzeugbezogenen Längsseite des Vierpunktlenkers - lässt sich insbesondere die Torsionssteifigkeit und/oder die Längssteifigkeit des Vierpunktlenkers entlang der Fahrtrichtung weiter erhöhen, während das Torsionsverhalten des Vierpunktlenkers weiterhin vorwiegend vom Lenkerkörper 1 bestimmt wird, welcher auch hier in Form einer Faserverbundanordnung ausgebildet ist.

### Bezugszeichen

- 1: Korpusbereich
- 2: Lenkerarm, Biegeträger
- 3: Lageraufnahme
- 4: Querschnittsform
- 5: Verstärkungsrohr
- 6,7: Wandung
- 8: Abstandshalter
- 9: Korpushöhe
- 10, 11: Faserstrang, Prepreg, Longitudinalfaseranordnung
- 12: Wandungsbereich
- 13: Torsionsrohr

## Patentansprüche

1. Vierpunktlenker für eine Achsaufhängung einer Starrachse, insbesondere eines Nutzfahrzeugs, der Vierpunktlenker aufweisend vier Lageraufnahmen (3), von denen zwei Lageraufnahmen (3) an der Fahrzeugachse und zwei Lageraufnahmen (3) am Fahrzeugrahmen anlenkbar sind, wobei der Vierpunktlenker einen tordierbaren, dem durch die Lageraufnahmen (3) gebildeten Trapez im Wesentlichen einbeschriebenen Lenkerkörper (1, 2) umfasst, der aus einer Faserverbundanordnung gebildet ist, wobei die Faserverbundanordnung zumindest eine, zumindest einer Lageraufnahme (3) zugeordnete Longitudinalfaseranordnung (10, 11) umfasst, welche die zumindest eine Lageraufnahme (3) zumindest entlang deren halben Umfangs einschließt, sowie entlang zumindest Teilen des Lenkerkörpers (1, 2) verläuft, gekennzeichnet durch zwei Longitudinalfaseranordnungen (10, 11), wobei jeweils eine Longitudinalfaseranordnung (10, 11) einem der beiden diagonal gegenüberliegend angeordneten Lageraufnahmenpaare (3) zugeordnet ist.

2. Vierpunktlenker nach Anspruch 1, **dadurch gekennzeichnet, dass** der Lenkerkörper (1, 2) ein geschlossenes Profil bildet.

3. Vierpunktlenker nach Anspruch 1 oder 2, **dadurch gekennzeichnet, dass** der Lenkerkörper (1, 2) zumindest einen Steg aufweist, der gegenüberliegende Wandungen (6, 7) des Lenkerkörpers (1, 2) schubsteif miteinander verbindet.

4. Vierpunktlenker nach einem der Ansprüche 1 bis 3, **dadurch gekennzeichnet, dass** der Lenkerkörper (1, 2) zumindest bereichsweise mit einem Füllkörper aus einem schubsteifen Füllmaterial ausgefüllt ist.

5. Vierpunktlenker nach Anspruch 4, **dadurch gekennzeichnet, dass** der Füllkörper schubfest mit den Wandungen (6, 7) des Lenkerkörpers (1, 2) verbunden ist.

6. Vierpunktlenker nach einem der Ansprüche 1 bis 5, **dadurch gekennzeichnet, dass** der Lenkerkörper (1, 2) ein in Fahrzeugquerrichtung und/oder in Fahrzeuglängsrichtung zumindest einseitig offenes Profil bildet.

7. Vierpunktlenker nach einem der Ansprüche 1 bis 6, **dadurch gekennzeichnet, dass** der Lenkerkörper (1, 2) zumindest einen längenveränderbaren Abstandshalter (8) zwischen zwei gegenüberliegenden Wandungen (6, 7) des Lenkerkörpers (1, 2) aufweist.

8. Vierpunktlenker nach einem der Ansprüche 1 bis 7, **dadurch gekennzeichnet, dass** der Lenkerkörper (1, 2) in der fahrzeugbezogenen Draufsicht eine im Wesentlichen einstückig kreuzförmige bzw. X-förmige Gestalt mit einem zentralen Korpusbereich (1) und vier peripheren, die Lageraufnahmen (3) tragenden Lenkerarmen (2) bildet, wobei die Lenkerarme (2) als im Querschnitt profilierte Biegeträger (2) gestaltet sind, deren Querschnittsform im Wesentlichen einem Kastenprofil oder einem I-Träger entspricht.

9. Vierpunktlenker nach einem der Ansprüche 1 bis 8, **dadurch gekennzeichnet, dass** die beiden Lageraufnahmen (3) der fahrzeugbezogen links bzw. rechts angeordneten Lageraufnahmenpaare jeweils mittels eines Torsionsrohrs (13) starr miteinander verbunden sind.

10. Vierpunktlenker nach Anspruch 9 **dadurch gekennzeichnet, dass** das Torsionsrohr (13) aus Metall besteht, wobei die durch das Torsionsrohr (13) miteinander verbundenen beiden Lageraufnahmen (3) eines Lageraufnahmenpaars einstückig mit dem Torsionsrohr (13) ausgebildet sind.

11. Vierpunktlenker nach einem der Ansprüche 1 bis 10, **dadurch gekennzeichnet, dass** im Bereich zumindest einer Lageraufnahme (3) eine Lagerhülse bzw. ein Elastomerlager als Fertigteil einlaminiert ist.

12. Vierpunktlenker nach Anspruch 11, **dadurch gekennzeichnet, dass** die zumindest eine Lagerhülse einstückig mit dem Lenkerkörper bzw. mit den Lenkerarmen (2) ausgebildet ist.

13. Vierpunktlenker nach einem der Ansprüche 1 bis 12, **dadurch gekennzeichnet, dass** zumindest eine Lageraufnahme (3) zur Aufnahme eines nichtelastischen rotatorischen Gelenks für die Anbindung des Vierpunktlenkers an Fahrzeugachse bzw. Fahrzeugrahmen ausgebildet ist.

14. Vierpunktlenker nach einem der Ansprüche 1 bis 13, **dadurch gekennzeichnet, dass** zumindest eine Lageraufnahme (3) bzw. zumindest ein Lenkerarm (2) zur nichtgelenkigen Anbindung des Vierpunktlenkers an Fahrzeugachse bzw. Fahrzeugrahmen ausgebildet ist.

15. Vierpunktlenker nach Anspruch 14, **dadurch gekennzeichnet, dass** der Lenkerkörper (1, 2) bzw. die Lenkerarme (2) im Bereich zumindest einer Lageraufnahme (3) biegeelastisch ausgebildet sind.

16. Vierpunktlenker nach Anspruch 15, **dadurch gekennzeichnet, dass** der biegeelastisch ausgebildete Bereich des Lenkerkörpers (1, 2) bzw. der Lenkerarme (2) als Laminat ausgebildet ist, wobei das Laminat zumindest eine Laminatlage aus einem Elastomerwerkstoff umfasst.

## Claims

1. Four-point suspension arm for an axial suspension of a rigid axle, in particular of a commercial vehicle, the four-point suspension arm having four bearing receptacles (3), of which two bearing receptacles (3) are articulatable on the vehicle axle and two bearing receptacles (3) are articulatable on the vehicle frame, the four-point suspension arm comprising a torsionable suspension arm body (1, 2) which is essentially inscribed within the trapezium formed by the bearing receptacles (3) and which is formed from a composite fibre arrangement, the composite fibre arrangement comprising at least one longitudinal fibre arrangement (10, 11) which is assigned to at least one bearing receptacle (3) and which encloses the at least one bearing receptacle (3) at least along half the circumference of the latter and runs along at least parts of the suspension arm body (1, 2), **characterized by** two longitudinal fibre arrangements (10, 11), in each case one longitudinal fibre arrangement (10, 11) being assigned to one of the two pairs of bearing receptacles (3) arranged diagonally opposite one another.

2. Four-point suspension arm according to Claim 1, **characterized in that** the suspension arm body (1, 2) forms a closed profile.

3. Four-point suspension arm according to Claim 1 or 2, **characterized in that** the suspension arm body (1, 2) has at least one web which connects mutually opposite walls (6, 7) of the suspension arm body (1, 2) to one another in a shear-resistant manner.

4. Four-point suspension arm according to one of Claims 1 to 3, **characterized in that** the suspension arm body (1, 2) is filled at least in regions with a filler body made from shear-resistant filler material.

5. Four-point suspension arm according to Claim 4, **characterized in that** the filler body is connected to the walls (6, 7) of the suspension arm body (1, 2) in a shear-resistant manner.

6. Four-point suspension arm according to one of Claims 1 to 5, **characterized in that** the suspension arm body (1, 2) forms a profile which is open at least on one side in the vehicle transverse direction and/or in the vehicle longitudinal direction.

7. Four-point suspension arm according to one of Claims 1 to 6, **characterized in that** the suspension arm body (1, 2) has at least one length-variable spacer (8) between two mutually opposite walls (6, 7) of the suspension arm body (1, 2).

8. Four-point suspension arm according to one of Claims 1 to 7, **characterized in that**, in a top view with respect to the vehicle, the suspension arm body (1, 2) forms an essentially one-piece cruciform or X-shaped configuration with a central carcass region (1) and with four peripheral suspension arm limbs (2) carrying the bearing receptacles (3), the suspension arm limbs (2) being configured as flexural girders (2) of profiled cross section, the cross-sectional shape of which corresponds essentially to a box profile or to an I-girder.

9. Four-point suspension arm according to one of Claims 1 to 8, **characterized in that** the two bearing receptacles (3) of the pairs of bearing receptacles which are arranged on the left and right with respect to the vehicle are connected rigidly to one another in each case by means of a torsion tube (13).

10. Four-point suspension arm according to Claim 9, **characterized in that** the torsion tube (13) consists of metal, the two bearing receptacles (3), connected to one another by means of the torsion tube (13), of a pair of bearing receptacles being formed in one piece with the torsion tube (13).

11. Four-point suspension arm according to one of Claims 1 to 10, **characterized in that** a bearing sleeve or an elastomeric bearing is laminated in as a finished part in the region of at least one bearing receptacle (3).

12. Four-point suspension arm according to Claim 11, **characterized in that** the at least one bearing sleeve is formed in one piece with the suspension arm body or with the suspension arm limbs (2).

13. Four-point suspension arm according to one of Claims 1 to 12, **characterized in that** at least one bearing receptacle (3) is designed for receiving a non-elastic rotary joint for the tie-up of the four-point suspension arm to the vehicle axle or vehicle frame.

14. Four-point suspension arm according to one of Claims 1 to 13, **characterized in that** at least one bearing receptacle (3) or at least one suspension arm limb (2) is designed for the non-articulated tie-up of the four-point suspension arm to the vehicle axle or vehicle frame.

15. Four-point suspension arm according to Claim 14, **characterized in that** the suspension arm body (1, 2) or the suspension arm limbs (2) are designed to be flexurally elastic in the region of at least one bearing receptacle (3).

16. Four-point suspension arm according to Claim 15, **characterized in that** that region of the suspension arm body (1, 2) or of the suspension arm limbs (2) which is designed to be flexurally elastic is formed as a laminate, the laminate comprising at least one laminate layer made from an elastomeric material.

## Revendications

1. Bras de suspension à quatre points pour une suspension d'essieu d'un essieu rigide, en particulier d'un véhicule utilitaire, le bras de suspension à quatre points présentant quatre logements de palier (3) dont deux logements de palier (3) peuvent être articulés à l'essieu du véhicule et deux logements de palier (3) peuvent être articulés au châssis du véhicule, le bras de suspension à quatre points comprenant un corps de bras oscillant (1, 2) pouvant être tordu, essentiellement inscrit dans le trapèze formé par les logements de palier (3), qui est formé d'un agencement composite renforcé par des fibres, l'agencement composite renforcé par des fibres comprenant au moins un agencement à fibres longitudinales (10, 11) associé à au moins un logement de palier (3), qui inclut l'au moins un logement de palier (3) au moins le long de la moitié de sa périphérie, et qui s'étend le long d'au moins certaines parties du corps de bras oscillant (1, 2), **caractérisé par** deux agencements à fibres longitudinales (10, 11), à chaque fois un agencement à fibres longitudinales (10, 11) étant associé à l'une des deux paires de logements de palier (3) disposées diagonalement à l'opposé.

2. Bras de suspension à quatre points selon la revendication 1, **caractérisé en ce que** le corps de bras oscillant (1, 2) forme un profilé fermé.

3. Bras de suspension à quatre points selon la revendication 1 ou 2, **caractérisé en ce que** le corps de bras oscillant (1, 2) présente au moins une nervure qui relie l'une à l'autre, de manière rigide en poussée, des parois opposées (6, 7) du corps de bras oscillant (1, 2).

4. Bras de suspension à quatre points selon l'une quelconque des revendications 1 à 3, **caractérisé en ce que** le corps de bras oscillant (1, 2) est, au moins en partie, rempli d'un corps de remplissage en un matériau de remplissage rigide en poussée.

5. Bras de suspension à quatre points selon la revendication 4, **caractérisé en ce que** le corps de remplissage est connecté de manière résistant à la poussée aux parois (6, 7) du corps de bras oscillant (1, 2).

6. Bras de suspension à quatre points selon l'une quelconque des revendications 1 à 5, **caractérisé en ce que** le corps de bras oscillant (1, 2) forme un profilé au moins ouvert d'un côté dans la direction transversale du véhicule et/ou dans la direction longitudinale du véhicule.

7. Bras de suspension à quatre points selon l'une quelconque des revendications 1 à 6, **caractérisé en ce que** le corps de bras oscillant (1, 2) présente au moins un élément d'espacement (8) de longueur variable entre deux parois opposées (6, 7) du corps de bras oscillant (1, 2).

8. Bras de suspension à quatre points selon l'une quelconque des revendications 1 à 7, **caractérisé en ce que** le corps de bras oscillant (1, 2), en vue de dessus rapportée au véhicule, forme une configuration essentiellement d'une seule pièce en forme de croix ou de X avec une région de corps centrale (1) et quatre bras oscillants (2) périphériques portant les logements de palier (3), les bras oscillants (2) étant configurés sous forme de supports flexibles (2) profilés en section transversale, dont la forme en section transversale correspond essentiellement à un profilé en caisson ou à un support en I.

9. Bras de suspension à quatre points selon l'une quelconque des revendications 1 à 8, **caractérisé en ce que** les deux logements de palier (3) des paires de logements de palier disposées à gauche et à droite par rapport au véhicule sont connectés rigidement l'un à l'autre à chaque fois au moyen d'un tube de torsion (13).

10. Bras de suspension à quatre points selon la revendication 9, **caractérisé en ce que** le tube de torsion (13) se compose de métal, les deux logements de palier (3) d'une paire de logements de palier, connectés l'un à l'autre par le tube de torsion (13), étant réalisés d'une seule pièce avec le tube de torsion (13).

11. Bras de suspension à quatre points selon l'une quelconque des revendications 1 à 10, **caractérisé en ce que** dans la région d'au moins un logement de palier (3) est incorporé(e) par laminage une douille palier ou un palier élastomère en tant que pièce finie.

12. Bras de suspension à quatre points selon la revendication 11, **caractérisé en ce que** l'au moins une douille palier est réalisée d'une seule pièce avec le corps de bras oscillant ou avec les bras oscillants (2).

13. Bras de suspension à quatre points selon l'une quelconque des revendications 1 à 12, **caractérisé en ce qu'**au moins un logement de palier (3) est réalisé pour recevoir une articulation rotative non élastique pour la liaison du bras de suspension à quatre points à l'essieu du véhicule ou au châssis du véhicule.

14. Bras de suspension à quatre points selon l'une quelconque des revendications 1 à 13, **caractérisé en ce qu'**au moins un logement de palier (3) ou au moins un bras oscillant (2) est réalisé pour la liaison non articulée du bras de suspension à quatre points à l'essieu du véhicule ou au châssis du véhicule.

15. Bras de suspension à quatre points selon la revendication 14, **caractérisé en ce que** le corps de bras oscillant (1, 2) ou les bras oscillants (2) sont réalisés de manière élastiquement flexible dans la région d'au moins un logement de palier (3).

16. Bras de suspension à quatre points selon la revendication 15, **caractérisé en ce que** la région du corps de bras oscillant (1, 2) ou des bras oscillants (2) réalisée de manière élastiquement flexible est réalisée sous forme de stratifié, le stratifié comprenant au moins une couche stratifiée en matériau élastomère.
